# EUROPÄISCHE PATENTSCHRIFT

(11) **EP 3 233 635 B1**
(45) Veröffentlichungstag und Bekanntmachung des Hinweises auf die Patenterteilung: **18.07.2018**
(21) Anmeldenummer: 15820028.7
(22) Anmeldetag: 10.12.2015
(51) Int. Cl.: B64D 11/00, B64D 13/00

(54) **ÜBERKOPF-GEPÄCKFACH FÜR FLUGZEUGE**
OVERHEAD LUGGAGE COMPARTMENT FOR AIRCRAFT
COMPARTIMENT À BAGAGES DE PLAFOND POUR AVIONS

(30) Priorität: 15.12.2014 AT 509042014
(43) Veröffentlichungstag der Anmeldung: 25.10.2017
(73) Patentinhaber: FACC AG, 4910 Ried im Innkreis (AT)
(72) Erfinder: KAMMERER, Bernhard, 4755 Zell an der Pram (AT); KOLETNIK, Sandi, 4982 Mörschwang (AT); SCHÖRKHUBER, Jakob, 4682 Geboltskirchen (AT); KRALOVEC, Christoph, 4020 Linz (AT)
(74) Vertreter: Sonn & Partner Patentanwälte
(86) Internationale Anmeldenummer: PCT/AT2015/050314
(87) Internationale Veröffentlichungsnummer: WO 2016/094916

(56) Entgegenhaltungen:
- EP-A1- 0 718 189
- EP-A1- 1 803 645
- EP-A2- 0 983 938
- US-A1- 2006 237 585

## Beschreibung

Die Erfindung betrifft ein Überkopf-Gepäckfach für Flugzeuge, mit einer um eine Drehachse zwischen einer geschlossenen und einer geöffneten Position verschwenkbaren Mulde zur Aufnahme von Gepäckstücken, und mit einer die Mulde in der geschlossenen Position umgebenden Einhausung mit daran angeordneten Vorrichtungen zur Befestigung an einer tragenden Struktur des Flugzeugs und mit einer Aufhängevorrichtung für eine Passagier-Serviceeinheit, und mit einem Verschlusselement zum Halten der Mulde in der geschlossenen Position.

Die vorliegende Erfindung bezieht sich hauptsächlich auf Überkopf-Gepäckfächer für Passagierflugzeuge. Eine Anwendung auch bei Schienenfahrzeugen oder anderen, zum Passagiertransport eingerichteten Transportmittel, beispielsweise Schiffen, ist jedoch auch denkbar.

Bei den Überkopf-Gepäckfächern für Flugzeuge unterscheidet man zwischen feststehenden Gepäckfächern (fixed bins) mit einem feststehenden Gehäuse und einer verschwenkbaren Klappe und bewegbaren Gepäckfächern (movable bins) mit einer absenkbaren Mulde oder Schütte und einer Umhüllung bzw. Einhausung. Derartige Überkopf-Gepäckfächer werden meistens aus Verbundwerkstoffen aus faserverstärktem Kunststoff und einem Wabenkern in Leichtbauweise hergestellt. Die Bewegung der Klappe bei den feststehenden Überkopf-Gepäckfächern und der Mulde bei den bewegbaren Gepäckfächern erfolgt in der Regel manuell, wobei die Bewegung fallweise durch Kraftunterstützungselemente unterstützt wird. Insbesondere bei sehr großen Überkopf-Gepächfächern mit einem großen Volumen zur Aufnahme von Gepäckstücken, ist eine elektrische Unterstützung der Bewegung vorteilhaft oder sogar notwendig.

Die vorliegende Erfindung bezieht sich auf bewegbare Überkopf-Gepäckfächer (movable bins), welche manuell oder durch einen elektrischen Antrieb in die geöffnete und geschlossene Postion überführbar ist.

Ein Überkopf-Gepäckfach der gegenständlichen Art ist beispielsweise aus der EP 1 803 645 A1 bekannt geworden. Sie stellt den nächstliegenden Stand der Technik dar und offenbart den Oberbegriff des Anspruchs 1. Die WO 2014/117198 A1 beschreibt Überkopf-Gepäckfächer, insbesondere für kleinere Passagierflugzeuge mit nur einem Gang und beiderseits des Ganges angeordneten Überkopf-Gepäckablagen, welche sowohl als feststehende als auch bewegbare Gepäckfächer ausgebildet sein können.

Konstruktionen von Überkopf-Gepäckfächern, die trotz niedrigem Eigengewicht sehr stabil und widerstandsfähig sind und möglichst einfach herstellbar sind, werden beispielsweise in der EP 1 434 713 B1 oder der WO 2005/054054 A1 beschrieben.

Die US 5,456,529 A beschreibt ein elektrisch betätigbares Überkopfgepäckfach mit einer absenkbaren Mulde zur Aufnahme der Gepäckstücke, wobei die Mulde umgebende Einhausung aus entsprechenden Platten gebildet ist.

Die US 2013/0119200 A1 beschreibt ein elektrisch betätigbares bewegbares Überkopfgepäckfach für Flugzeuge mit einer zwischen einer geschlossenen und einer geöffneten verschwenkbaren Mulde der gegenständlichen Art, wobei die die Mulde umgebende Einhausung aus Seitenwänden und entsprechenden Deckschichten ausgebildet ist.

Die Aufgabe der Erfindung besteht darin, ein oben genanntes Überkopf-Gepäckfach zu schaffen, welches ein möglichst geringes Eigengewicht bei gleichzeitig möglichst großer Stabilität und Festigkeit und möglichst großem Volumen für die Aufnahme der Gepäckstücke aufweist und gleichzeitig aber eine möglichst geringe Bauhöhe besitzt, so dass unterhalb des Überkopf-Gepäckfachs möglichst viel Freiraum bzw. Kopffreiheit für die unter den Gepäckfächern sitzenden Passagiere gebildet wird. Die Montage und Demontage des Überkopf-Gepäckfachs soll möglichst rasch und einfach möglich sein. Nachteile bekannter Überkopf-Gepäckfächer sollen vermieden oder zumindest reduziert werden.

Gelöst wird die erfindungsgemäße Aufgabe dadurch, dass die Einhausung durch zwei seitlich der Mulde angeordnete Rahmenteile gebildet ist, welche Rahmenteile über Querstreben miteinander verbunden sind, und dass die Befestigungsvorrichtungen und die Aufhängevorrichtung für die Passagier-Serviceeinheit sowie zumindest ein Anschlagelement zur Begrenzung der geöffneten Position der Mulde an den Rahmenteilen angeordnet sind.

Erfindungsgemäß ist anstelle der konventionellen Einhausung aus Verbundwerkstoff eine Konstruktion aus zwei Rahmenteilen vorgesehen, welche über Querstreben miteinander verbunden sind. Dadurch kann eine Reduktion des Gewichts des Überkopf-Gepäckfachs aber auch eine Reduktion der Bauhöhe bei gleichbleibendem oder sogar größerem Aufnahmevolumen erzielt werden. Bei der üblichen Anordnung von Überkopf-Gepäckfächern nebeneinander kann erfindungsgemäß jeweils ein Rahmenteil für die Aufnahme der Mulden zweier Überkopf-Gepäckfächer verwendet werden. Dadurch kann noch mehr Gesamtgewicht eingespart und Platz für die Gepäckstücke geschaffen werden, da die Mulden zweier benachbarter Überkopf-Gepäckfächer von nur einem Rahmenteil aufgenommen werden. Durch den Wegfall einer klassischen Einhausung kann auch die Montage vereinfacht und beschleunigt werden, da das Gewicht der erfindungsgemäßen Einhausung gegenüber klassischen Umhüllungen verringert ist und zudem die Zugänglichkeit verbessert ist. Die durch die beiden Rahmenteile und Querstreben gebildete Einhausung beinhaltet sämtliche Vorrichtungen zur Befestigung an einer tragenden Struktur des Flugzeuges und auch eine Aufhängevorrichtung für die Befestigung einer Passagier-Serviceeinheit (Passenger Service Unit PSU), welche die Leselampen-Lüftungsöffnungen und Sauerstoffmasken für die darunter sitzenden Passagiere enthalten. Die ebenfalls an den Rahmenteilen angeordneten Anschlagelemente zur Begrenzung der geöffneten Position der Mulde limitieren die Bewegung der Mulde in der geöffneten Position.

Vorteilhafter Weise ist die Drehachse außerhalb der Mulde angeordnet. Dieses Merkmal bietet hinsichtlich der Kinematik der bewegbaren Mulde Vorteile. Darüber hinaus liegt dadurch der Gesamtschwerpunkt des Überkopf-Gepäckfachs näher an der tragenden Struktur des Flugzeugs, verglichen mit herkömmlichen Überkopf-Gepäckfächern. Die Anordnung der Drehachse und die Konstruktion des Überkopf-Gepäckfachs zusammen mit den Rahmenteilen, der PSU-Einheit, der strukturnahen und einfacheren Anbindung und der Platzeinsparung in Y-Richtung führt zu einer größeren Stehhöhe bzw. Kopffreiheit für die Passagiere.

Wenn zumindest eine Querstrebe oberhalb der Mulde und zumindest eine Querstrebe hinter der Mulde angeordnet ist, kann eine optimale Stabilität der Einhausung erzielt werden. An der hinter der Mulde angeordneten Querstrebe kann ein zusätzlicher Drehpunkt bzw. Lagerpunkt bei sehr langen Ausführungen des Überkopf-Gepäckfachs vorgesehen werden.

Die Rahmenteile und die Querstreben können aus Metall oder aus faserverstärktem Kunststoffverbundwerkstoff gebildet sein. Bei Metallen eignen sich insbesondere Leichtmetalle, wie Aluminium oder Aluminiumlegierungen. Bei der Herstellung aus faserverstärkten Kunststoffverbundwerkstoff eignen sich Verstärkungsfasern aus verschiedenen Materialien, insbesondere Kohlenstoff, Glas oder Aramid. Die Herstellung kann beispielsweise im RTM-Verfahren (Resin Transfer Molding) erfolgen. Durch die Verwendung derartiger Materialien kann trotz eines sehr niedrigen Gewichts eine hohe Stabilität erzielt werden.

Zwischen der Mulde und zumindest einem Rahmenteil können Dämpfungselemente angeordnet sein, welche die Bewegung der Mulde von der geschlossenen Position in die geöffnete Position und umgekehrt dämpfen. Die Dämpfungselemente können verschiedenartig ausgebildet sein und werden an den dafür geeigneten Stellen positioniert.

Die Passagier-Serviceeinheit ist vorzugsweise zwischen der Aufhängevorrichtung und einer an der tragenden Struktur des Flugzeugs befestigten Montageschiene angeordnet. Dadurch, dass die Passagier-Serviceeinheit zwischen Überkopf-Gepäckfach und Flugzeugrumpf angeordnet ist, wird einerseits die Montage des Überkopf-Gepäckfachs aber auch der Passagier-Serviceeinheit erleichtert, andererseits aber auch die zur Verfügung stehende Höhe unter dem Überkopf-Gepäckfach und somit der Komfort für die Passagiere erhöht.

Vorteilhafterweise ist eine Elektromotor-Getriebeeinheit zur Bewegung der Mulde um die Drehachse zwischen der geschlossenen und der geöffneten Position vorgesehen.

Gemäß einem Merkmal der Erfindung ist die Elektromotor-Getriebeeinheit an einem Rahmenteil angeordnet und mit einer entlang der Mulde verlaufenden Hohlwelle verbunden, welche Hohlwelle über entsprechende Verbindungselemente mit der Mulde verbunden ist. Verbindungselemente können beispielsweise durch Seile oder Bänder realisiert werden. Durch eine derartige Konstruktion des elektrischen Antriebs für die Betätigung des bewegbaren Überkopf-Gepäckfachs kann eine gute Kräfteübertragung erzielt werden und eine Verwindung der Mulde, insbesondere bei sehr großen Überkopf-Gepäckfächern, verhindert werden.

Die Mulde ist aus zwei Seitenwänden, einem Boden, einer Rück- und einer Deckwand gebildet. Die Bestandteile der Mulde werden üblicherweise aus faserverstärktem Kunststoff und Wabenkernen in Leichtbauweise hergestellt. Dadurch, dass die Mulde ausschließlich an ihrer Außenseite mit den Rahmenteilen verbunden wird, kann der Innenraum der Mulde frei von Befestigungskomponenten oder dgl. mit glatter und optisch ansprechender Oberfläche herstellt werden. Da die Betätigung der Mulde mit Hilfe des elektrischen Antriebs erfolgt, sind auch keine Federelemente in der Mulde notwendig. Somit steht mehr Volumen für die Aufnahme von Gepäckstücken zur Verfügung.

Wenn der Boden der Mulde doppelt ausgebildet ist, kann eine höhere Belastbarkeit der Mulde und eine optimale Oberfläche sowohl im Inneren der Mulde als auch an der Unterseite der Mulde geschaffen werden. Im allenfalls vorhandenen Zwischenraum zwischen den zumindest beiden Bodenelementen können Leitungen oder Kabel verlegt werden.

Die Seitenwände der Mulde sind zumindest in dem in geöffneter Position der Mulde sichtbaren Bereich glatt ausgebildet. Dadurch resultiert ein besonders ansprechendes Design.

Die Mulde kann zwischen 1,5 und 2,5 m lang sein, also bei Flugzeugen über vier sogenannte Frames der tragenden Struktur des Flugzeugs verlaufen, welche Frames üblicherweise etwa 0,5 m auseinander liegen. Durch die Verwendung besonders langer Mulden bzw. Überkopf-Gepäckfächer wird der gesamte zur Verfügung stehende Raum für die Gepäckstücke erhöht.

Vorteilhafterweise ist oberhalb der Mulde zwischen den Rahmenteilen eine Abdeckplatte angeordnet, welche die Öffnung der Mulde in geschlossenem Zustand abdeckt. Zusätzlich dient die Abdeckplatte auch der optischen Gestaltung der Flugzeugkabine und bildet den Übergang zu einem entsprechend gestalteten Deckenpaneel.

An der Außenseite der zwischen den Rahmenteilen angeordneten Abdeckplatte kann eine Sitzreihen-Beschriftung angeordnet sein. Durch eine derartige Anordnung der üblichen Sitzreihen-Beschriftung, welche allenfalls beleuchtet sein kann, ist eine gute Sichtbarkeit sowohl in geöffneter als auch in geschlossener Position der Mulde erzielbar. Im Gegensatz zum Stand der Technik, wo häufig zwei Sitzreihenbeschriftungen je Sitzreihe nötig sind, ist hier nur eine Sitzreihenbeschriftung erforderlich.

Weiters kann an der Mulde des Überkopf-Gepäckfachs ein Handlauf oder dgl. angeordnet sein. Ein solcher Handlauf in Form einer horizontal an der Außenseite der Mulde verlaufenden Vertiefung für die Finger der Passagiere bzw. des Bordpersonals erleichtert das Gehen während des Fluges. Anstelle eines Handlaufs oder dgl. kann auch eine optische Unterbrechung an der Außenseite der Mulde ein Designelement der Innenausstattung der Passagierkabine realisiert werden.

Wenn an den Rahmenteilen Dichtungselemente zur Abdichtung des Spaltes zwischen Rahmenteil und Seitenwand der Mulde in geöffneter und geschlossener Position der Mulde angeordnet sind, kann einerseits ein Abdichten des Spalts für verbesserte Optik erreicht werden, und es können darüber hinaus damit Anforderungen der Behörden hinsichtlich des Versteckens von Gegenständen besonders gut erfüllt werden. Beispielsweise müssen nach bestimmten Sicherheitsrichtlinien vor einem Flug sämtliche mögliche Verstecke für Gegenstände überprüft werden. Durch die gegenständlichen Dichtungselemente können die Verstecke reduziert und somit die Zeiten für Überprüfung verringert werden.

Vorzugsweise sind an den Rahmenteilen Einrichtungen zur Befestigung von Deckenpaneelen integriert. Durch derartige bereits integrierte Befestigungseinrichtungen kann die Montage der Deckenpaneele erleichtert und das Gesamtgewicht noch weiter reduziert werden.

Wenn das zumindest eine Anschlagelement zur Begrenzung der geöffneten Position der Mulde verstellbar ausgebildet ist, kann ein Toleranzausgleich rasch und einfach durchgeführt werden.

Schließlich ist es von Vorteil, wenn das zumindest eine Anschlagelement abnehmbar ausgebildet ist, um einen Zugang von Wartungspersonal hinter der Mulde in die Bereiche oberhalb der Passagierserviceeinheit und zur tragenden Struktur des Flugzeugs zu ermöglichen. Das Abnehmen bzw. Entriegeln zweier Anschlagelemente zweier gegenüberliegender Rahmenteile kann sehr rasch von entsprechend ausgebildetem Personal, allenfalls unter Zuhilfenahme von Spezialwerkzeug durchgeführt werden, und die Mulde über die geöffnete Position hinaus verschwenkt werden, um einen Zugang in den Bereich hinter die Mulde des Überkopf-Gepäckfachs zu erzielen.

In der Mulde kann eine Lichtschranke oder dgl. zur Vermeidung einer elektrisch betätigten Bewegung in die geschlossene Position im Falle von herausragenden Teilen angeordnet sein. Eine derartige Lichtschranke oder dgl. ist vorzugsweise direkt mit der Elektromotor-Getriebeeinheit zur Bestätigung des Überkopf-Gepäckfachs gekoppelt, so dass im Falle eines Blockieren des Lichtstrahls sofort der Schließvorgang unterbrochen und eine Verletzung von Passagieren oder eine Zerstörung von Gepäckstücken vermieden werden kann. Anstelle eines elektrooptischen Sensors kann auch ein luftgefüllter Schlauch eingesetzt werden, an dessen Enden entsprechende Drucksensoren oder dgl. angeordnet sind, welche eine Deformation des Schlauches und somit einen Druckanstieg detektieren.

Vorteilhafter Weise ist weiters an der Mulde ein Endschalter angeordnet, der mit der Elektromotor-Getriebeeinheit verbunden ist. Durch einen derartigen Endschalter, der sowohl mechanisch als auch berührungslos, beispielsweise elektrooptisch, ausgebildet sein kann, wird ein sicheres Abschalten des Elektromotors bei Erreichen der geöffneten und/oder der geschlossenen Position erzielt.

Die vorliegende Erfindung wird anhand der beigefügten Zeichnungen näher erläutert. Darin zeigen:
- Fig. 1: eine perspektivische Ansicht auf einen Teil eines erfindungsgemäß ausgebildeten Überkopf-Gepäckfachs;
- Fig. 2: eine perspektivische Ansicht auf eine Ausführungsform eines Überkopf-Gepäckfachs bei geschlossener Position der Mulde;
- Fig. 3: eine perspektivische Ansicht auf einen Teil eines erfindungsgemäß ausgebildeten Überkopf-Gepäckfachs mit Elektromotor-Getriebeeinheit;
- Fig. 4a: eine perspektivische Ansicht auf eine Ausführungsform eines Überkopf-Gepäckfachs mit Elektromotor-Getriebeeinheit bei geschlossener Position der Mulde;
- Fig. 4b: eine perspektivische Ansicht auf das Überkopf-Gepäckfach gemäß Fig. 4a bei geöffneter Position der Mulde;
- Fig. 5a: eine Seitenansicht auf ein Überkopf-Gepäckfach bei geschlossener Position der Mulde;
- Fig. 5b: eine Seitenansicht auf das Überkopf-Gepäckfach gemäß Fig. 3 bei geöffneter Position der Mulde;
- Fig. 6: eine Seitenansicht auf die Einhausung und daran angeordnetem Deckenpaneel und Passagier-Serviceeinheit;
- Fig. 7a: eine Detailansicht auf die Seite eines Überkopf-Gepäckfachs mit Dichtungselementen; bei geschlossener Position der Mulde;
- Fig. 7b: eine Detailansicht auf die Seite eines Überkopf-Gepäckfachs mit Dichtungselementen bei geöffneter Position der Mulde;
- Fig. 8: ein Querschnitt durch einen Teil eines Rumpfs eines Flugzeugs mit daran angeordneten Überkopf-Gepäckfächern gemäß der vorliegenden Erfindung.

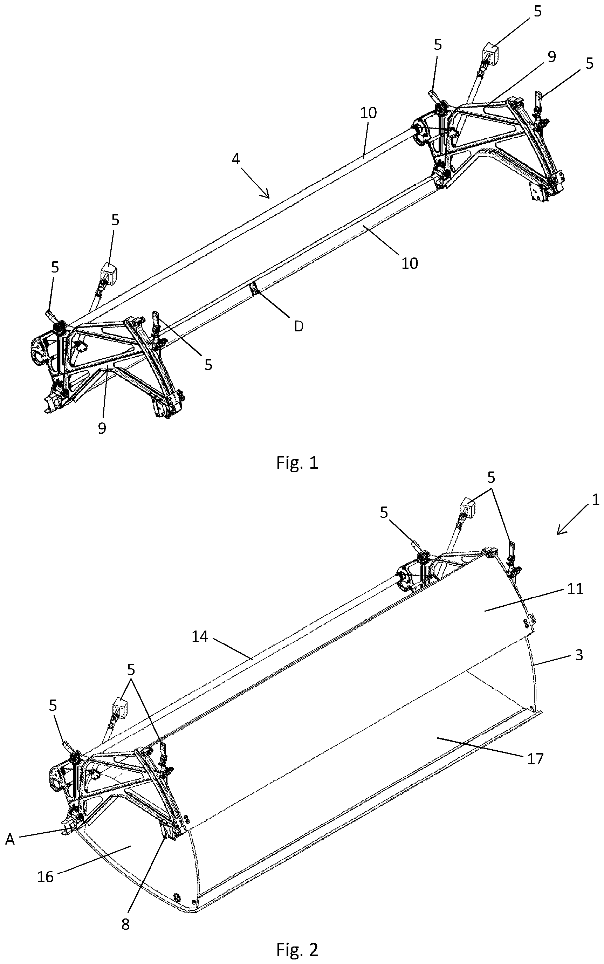

Fig. 1 zeigt eine perspektivische Ansicht auf einen Teil eines Überkopf-Gepäckfachs 1 gemäß der vorliegenden Erfindung, wobei die üblicherweise vorhandene Einhausung 4 durch zwei Rahmenteile 9 gebildet ist, welche Rahmenteile 9 über Querstreben 10 miteinander verbunden sind. Die Vorrichtungen 5 zur Befestigung des Überkopf-Gepäckfachs 1 an einer tragenden Struktur S des Flugzeugs F sind an den Rahmenteilen 9 angeordnet. Zwischen den Rahmenteilen 9 ist die Mulde 3 angeordnet, wie anhand der nachfolgenden Fig. 2 ersichtlich ist. Bei längeren Ausführungen des Überkopf-Gepäckfachs 1 kann an der hinter der Mulde 3 angeordneten Querstrebe 10 ein zusätzlicher Drehpunkt D vorgesehen sein.

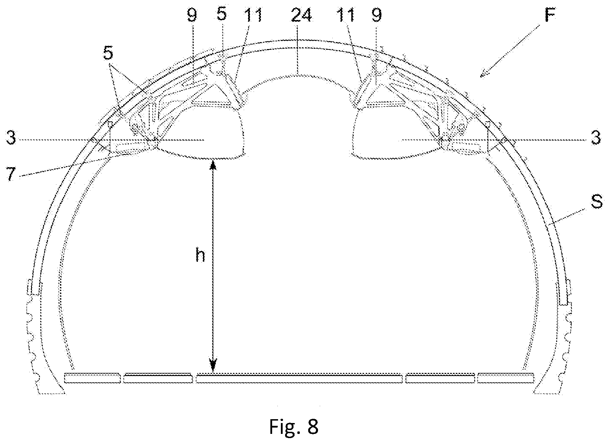

Fig. 2 zeigt eine perspektivische Ansicht auf eine Ausführungsform eines Überkopf-Gepäckfachs 1 gemäß der vorliegenden Erfindung bei geöffneter Position der Mulde 3. Dabei kann oberhalb bzw. vor der Mulde 3 zwischen den Rahmenteilen 9 eine Abdeckplatte 11 angeordnet sein. Diese Abdeckplatte 11 verschließt die Öffnung der Mulde 3 in der geschlossenen Position und bildet einen ansprechenden Übergang zwischen der Mulde 3 des Überkopf-Gepäckfachs 1 und der restlichen Innenausstattung der Flugzeugkabine, insbesondere dem Deckenpaneel (s. Fig. 8). Die Drehachse A, um welche die Mulde 3 zwischen der geschlossenen Position und der geöffneten Position bewegt wird, ist außerhalb der Mulde 3 angeordnet. Über ein Verschlusselement 8 wird die Mulde 3 in der geschlossenen Position gehalten. Die Mulde 3 besteht aus Seitenwänden 16, einer Deckwand 18, einem Boden 17 und einer Rückwand 22.

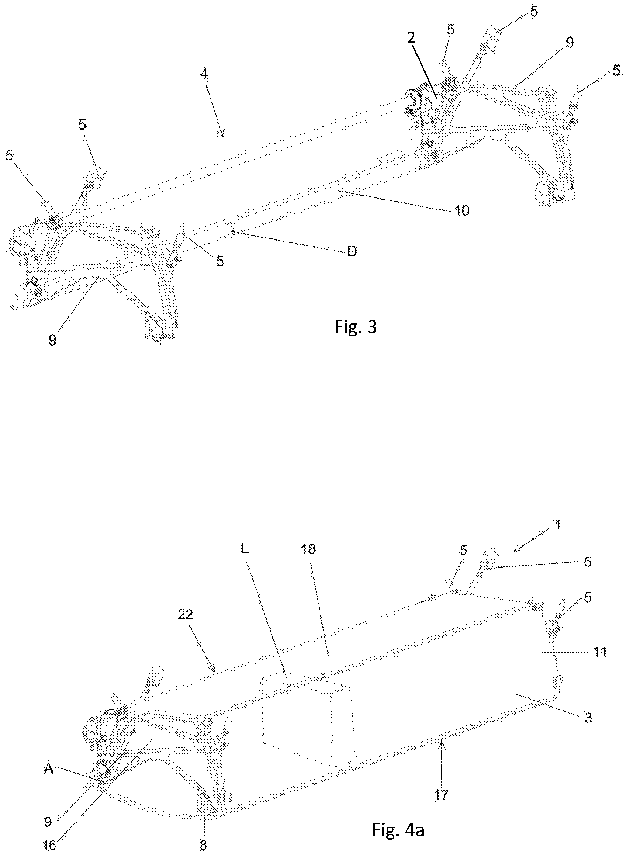

Fig. 3 zeigt eine Variante der Erfindung, wobei im Gegensatz zu der Ausführungsform gemäß Fig. 1 eine Elektromotor-Getriebeeinheit 2 zur Bewegung der Mulde 3 um die Drehachse A zwischen der geschlossenen und der geöffneten Position vorgesehen ist.

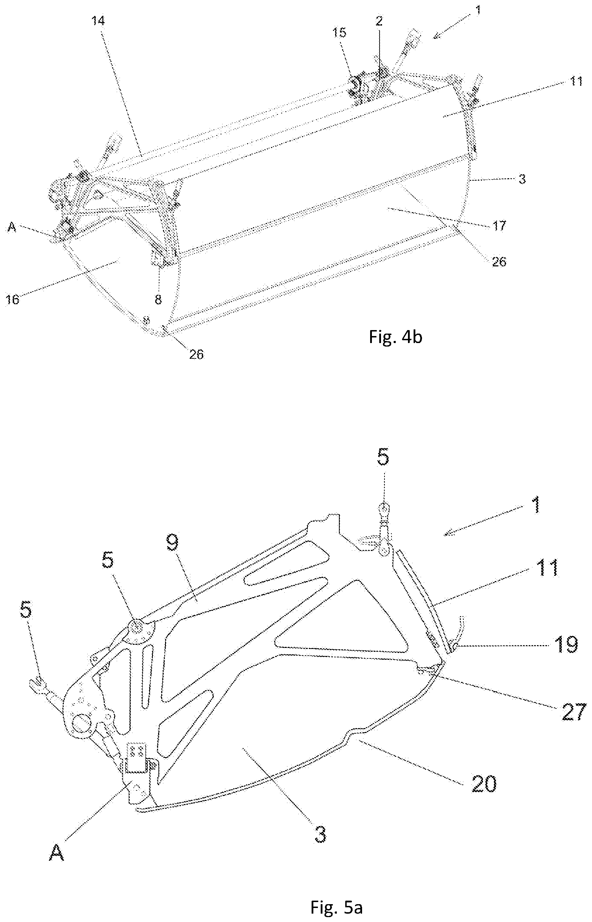

In Fig. 4a und 4b ist das Überkopf-Gepäckfach 1 gemäß Fig. 3 bei geschlossener und geöffneter Position der Mulde 3 dargestellt. Bei geschlossener Position der Mulde 3 verschließt die Abdeckplatte 11 die Öffnung der Mulde 3 und bildet einen ansprechenden Übergang zwischen der Mulde 3 des Überkopf-Gepäckfachs 1 und der restlichen Innenausstattung der Flugzeugkabine.

In Fig. 4b ist das Überkopf-Gepäckfach 1 gemäß Fig. 4a bei geöffneter Position der Mulde 3 dargestellt. Die Mulde 3 ist um die Drehachse A nach unten verschwenkt worden, wodurch die Öffnung der Mulde 3 unterhalb der Abdeckplatte 11 angeordnet ist und somit eine Beladen und Entladen zuläßt.

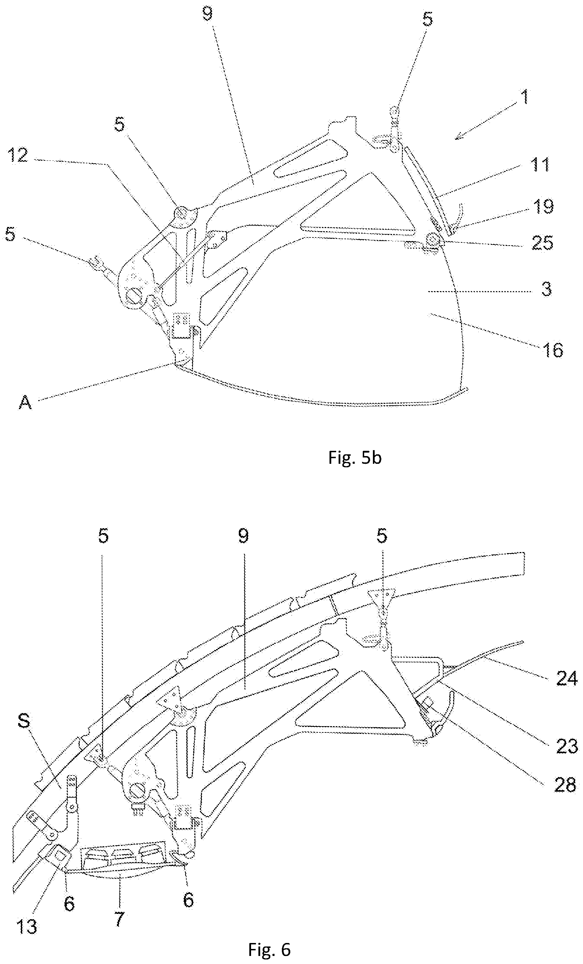

Fig. 5a zeigt eine Seitenansicht auf ein Überkopf-Gepäckfach 1 bei geschlossener Position der Mulde 3. Das elektrisch betätigbare bewegbare Überkopf-Gepäckfach 1 weist einen Elektromotor 2 zur Überführung der verschwenkbaren Mulde 3 zwischen einer geschlossenen Position (s. Fig. 4a) und einer geöffneten Position (s. Fig. 4b) auf. Die Mulde 3 ist zur Aufnahme von Gepäckstücken L oder dgl. ausgebildet. Das Volumen zur Aufnahme der Gepäckstücke L soll möglichst groß sein, wohingegen das Gesamtgewicht des Überkopf-Gepäckfachs 1 möglichst gering sein soll. Die Gesamthöhe des Überkopf-Gepäckfachs 1 soll ebenfalls möglichst gering sein, um unterhalb des Überkopf-Gepäckfachs 1 möglichst viel Platz für die Passagiere zur Verfügung stellen zu können. Die Mulde 3 wird in der geschlossenen Position von einer Einhausung 4 umgeben. An der Einhausung 4 sind Vorrichtungen 5 zur Befestigung an einer tragenden Struktur S des Flugzeugs F vorgesehen. Darüber hinaus enthält die Einhausung 4 Aufhängevorrichtungen 6 für die Passagier-Serviceeinheit 7 (s. Fig. 6), welche die Leselampen-Lüftungsöffnungen und Sauerstoffmasken für die Passagiere enthält. Erfindungsgemäß ist die Einhausung 4 durch zwei seitlich der Mulde 3 angeordnete Rahmenteile 9 gebildet, welche Rahmenteile 9 über Querstreben 10 miteinander verbunden sind. Ein Verschlusselement 8 kann zum Halten der Mulde 3 in der geschlossenen Position dienen. Zur Dämpfung der Bewegung der Mulde 3 können Dämpfungselemente 12 an geeigneten Stellen angeordnet sein. Durch die erfindungsgemäße Ausbildung der Einhausung 4 durch zwei Rahmenteile 9 und Querstreben 10 kann eine hohe Gewichtsreduktion erzielt werden. Unter der Voraussetzung der Herstellung der Mulde 3 mit ausreichender Festigkeit kann eine Länge l der Mulde zwischen 1,5 bis 2,5 m, d.h. über vier sog. frames einer Flugzeugstruktur erreicht werden. Der Innenraum der Mulde 3, welcher üblicherweise aus zwei Seitenwänden 16, einem Boden 17 und einer entsprechenden Rück- und Deckenwand 18 besteht, ist frei von Einbauelementen und kann somit mit besonders großem Volumen für die Gepäckstücke L ausgestattet werden.

Fig. 5b zeigt die Seitenansicht auf das Überkopf-Gepäckfach 1 gemäß Fig.3a in geöffneter Position der Mulde 3. Dabei ist die Öffnung der Mulde 3 unterhalb der Abdeckplatte 11 freigegeben und ermöglicht somit ein Be- und Entladen der Mulde 3.

Erfindungsgemäß ist die Drehachse A vorzugsweise außerhalb der Mulde 3 angeordnet, wie aus den Fig. 5a und 5b besser erkennbar ist. Zur Erzielung einer ausreichenden Stabilität der Einhausung 4 sind vorzugsweise zwei Querstreben, eine oberhalb der Mulde 3 und eine hinter der Mulde 3, angeordnet.

Die Rahmenteile 9 und die Querstreben 10 können aus Metall, vorzugsweise Aluminium oder einer Aluminiumlegierung oder aus faserverstärktem Kunststoff-Verbundwerkstoff, vorzugsweise im RTM-Verfahren (Resin Transfer Molding) hergestellt sein. Die Seitenwände 16, die Deckenwand 18 und die Rückwand 22 der Mulde 3 können relativ dünn und leicht hergestellt werden, da keine Belastung darauf ruht, wohingegen der Boden 17 der Mulde 3 entsprechend verstärkt ausgebildet oder sogar doppelt ausgeführt sein kann. An der Außenseite der Abdeckplatte 11 kann eine Sitzreihen-Beschriftung 19 angeordnet sein. Darüber hinaus kann die Oberfläche der Mulde 3 einen Handlauf 20 oder dgl. enthalten.

In den Fig. 5a und 5b ist auch das Anschlagelement 25 am Rahmenteil 9 ersichtlich, welches eine Begrenzung der geöffneten Position der Mulde 3 bewirkt. Toleranzen können durch eine Verstellung des Anschlagelements 25 ausgeglichen werden. Wenn das Anschlagelement auf jedem Rahmenteil 9 abnehmbar bzw. entriegelbar ausgebildet ist, kann ein Öffnen der Mulde 3 über die geöffnete Position hinaus zu Wartungszwecken erreicht werden.

Fig. 64 zeigt eine Seitenansicht auf das an der tragenden Struktur S befestigte Rahmenteil 9 des erfindungsgemäßen Überkopf-Gepäckfachs 1 und daran angeordnetem Deckenpaneel 24 und Passagier-Serviceeinheit 7. Hier ist die Aufhängevorrichtung 6 am Rahmenteil 9 zur Aufhängung der Passagier-Serviceeinheit 7 erkennbar. Darüber hinaus sind an den Rahmenteilen 9 entsprechende Befestigungseinrichtungen 23 zur Befestigung der Deckenpaneele 24 angeordnet bzw. integriert. Die Passagier-Serviceeinheit 7 kann besonders leicht zwischen der Aufhängevorrichtung 6 des Rahmenteils 9 und einer an der tragenden Struktur S des Flugzeuges F angeordneten Montageschiene 13 befestigt werden. Dadurch, dass die Passagier-Serviceeinheit 7 nicht wie üblich unterhalb des Überkopf-Gepäckfachs 1 sondern zwischen diesem und dem Flugzeugrumpf angeordnet wird, und aufgrund der weiteren Konstruktionsmerkmale des Überkopf-Gepäckfachs 1 kann die Gesamthöhe des Überkopf-Gepäckfachs 1 reduziert und somit die Kopffreiheit bzw. Stehhöhe unter dem Überkopf-Gepäckfach 1 vergrößert werden. Die Gesamtkonstruktion des elektrisch betätigbaren bewegbaren Überkopf-Gepäckfachs 1 ermöglicht auch ein einfache Anordnung der Lüftungsleitungen und der Kabinenbeleuchtung 28. Zudem sind reduzierte Toleranzen und eine verbesserte Spaltoptik erreichbar. Ein Toleranzausgleich kann sehr einfach durch Verstellung der Befestigungsvorrichtungen 5 erzielt werden.

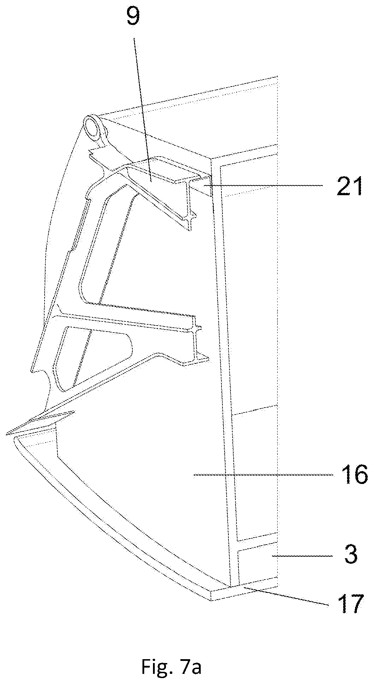

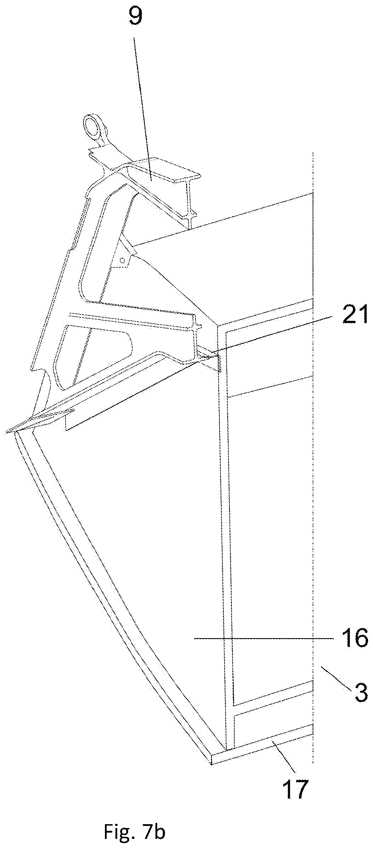

Aus Fig. 7a und 7b geht eine Detailansicht der Seitenwand 16 einer Mulde 3 eines Überkopf-Gepäckfachs 1 mit Dichtungselementen 21 zur Abdichtung des Spaltes zwischen Rahmenteil 9 und Seitenwand 16 der Mulde 3 hervor. Außenseitig an den Seitenwänden 16 der Mulde 3 sind Dichtungselemente 21 angeordnet, welche den Spalt zwischen Rahmenteil 9 und Seitenwand 16 der Mulde 3 sowohl in geschlossener Position (Fig. 7a) als auch in geöffneter Position (Fig. 7b) der Mulde 3 abdichten. Die Dichtungselemente 21 sind aus entsprechend elastischem Kunststoffmaterial hergestellt.

Schließlich zeigt Fig. 8 einen Querschnitt durch einen Teil eines Rumpfs eines Flugzeugs F mit daran angeordneten Überkopf-Gepäckfächern 1 gemäß der vorliegenden Erfindung. Die Standhöhe h unterhalb der Überkopf-Gepäckfächer 1 ist aufgrund der Bauweise und geringen Bauhöhe des Gesamtsystems bei gleichzeitig besonders großem Volumen zur Aufnahme der Gepäckstücke L besonders groß, wodurch der Komfort für die Passagiere erhöht werden kann.

## Patentansprüche

1. Überkopf-Gepäckfach (1) für Flugzeuge (F), mit einer um eine Drehachse (A) zwischen einer geschlossenen und einer geöffneten Position verschwenkbaren Mulde (3) zur Aufnahme von Gepäckstücken (L), und mit einer die Mulde (3) in der geschlossenen Position umgebenden Einhausung (4) mit daran angeordneten Vorrichtungen (5) zur Befestigung an einer tragenden Struktur (S) des Flugzeugs (F) und mit einer Aufhängevorrichtung (6) für eine Passagier-Serviceeinheit (7), und mit einem Verschlusselement (8) zum Halten der Mulde (3) in der geschlossenen Position, wobei
die Einhausung (4) durch zwei seitlich der Mulde (3) angeordnete Rahmenteile (9) gebildet ist, welche Rahmenteile (9) über Querstreben (10) miteinander verbunden sind,
**dadurch gekennzeichnet, dass** die Befestigungsvorrichtungen (5) und die Aufhängevorrichtung (6) für die Passagier-Serviceeinheit (7) sowie zumindest ein Anschlagelement (25) zur Begrenzung der geöffneten Position der Mulde (3) an den Rahmenteilen (9) angeordnet sind.

2. Überkopf-Gepäckfach (1) nach Anspruch 1, **dadurch gekennzeichnet, dass** die Drehachse (A) außerhalb der Mulde (3) angeordnet ist.

3. Überkopf-Gepäckfach (1) nach Anspruch 1 oder 2, **dadurch gekennzeichnet, dass** zumindest eine Querstrebe (11) oberhalb der Mulde (3) und zumindest eine Querstrebe (10) hinter der Mulde (3) angeordnet ist.

4. Überkopf-Gepäckfach (1) nach einem der Ansprüche 1 bis 3, **dadurch gekennzeichnet, dass** die Rahmenteile (9) und die Querstreben (10) aus Metall oder aus faserverstärktem Kunststoffverbundwerkstoff gebildet sind.

5. Überkopf-Gepäckfach (1) nach einem der Ansprüche 1 bis 4, **dadurch gekennzeichnet, dass** zwischen der Mulde (3) und zumindest einem Rahmenteil (9) Dämpfungselemente (12) angeordnet sind.

6. Überkopf-Gepäckfach (1) nach einem der Ansprüche 1 bis 5, **dadurch gekennzeichnet, dass** die Passagier-Serviceeinheit (7) zwischen der Aufhängevorrichtung (6) und einer an der tragenden Struktur (S) des Flugzeugs (F) befestigten Montageschiene (13) anordenbar ist.

7. Überkopf-Gepäckfach (1) nach einem der Ansprüche 1 bis 6, **dadurch gekennzeichnet, dass** eine Elektromotor-Getriebeeinheit (2) zur Bewegung der Mulde (2) um die Drehachse (A) zwischen der geschlossenen und der geöffneten Position vorgesehen ist.

8. Überkopf-Gepäckfach (1) nach Anspruch 7, **dadurch gekennzeichnet, dass** die Elektromotor-Getriebeeinheit (2) an einem Rahmenteil (9) angeordnet ist und mit einer entlang der Mulde (3) verlaufenden Hohlwelle (14) verbunden ist, welche Hohlwelle (14) über Getriebe (15) mit der Mulde (3) verbunden sind.

9. Überkopf-Gepäckfach (1) nach einem der Ansprüche 1 bis 8, **dadurch gekennzeichnet, dass** die Mulde (3) aus zwei Seitenwänden (16), einem Boden (17), einer Rückwand (22) und einer Deckwand (18) gebildet ist, und der Boden (17) der Mulde (3) vorzugsweise doppelt ausgebildet ist

10. Überkopf-Gepäckfach (1) nach Anspruch 9, **dadurch gekennzeichnet, dass** die Mulde (3) zwischen 1,5 und 2,5 m lang ist.

11. Überkopf-Gepäckfach (1) nach einem der Ansprüche 1 bis 10, **dadurch gekennzeichnet, dass** an der Außenseite einer zwischen den Rahmenteilen (9) angeordneten Abdeckplatte (11) eine Sitzreihen-Beschriftung (19) und bzw. oder an der Mulde (3) ein Handlauf (20) angeordnet ist.

12. Überkopf-Gepäckfach (1) nach einem der Ansprüche 9 bis 11, **dadurch gekennzeichnet, dass** an der Seitenwand (16) der Mulde (3) Dichtungselemente (21) zur Abdichtung des Spaltes zwischen Rahmenteil (9) und Seitenwand (16) der Mulde (3) in geöffneter und geschlossener Position der Mulde (3) angeordnet sind.

13. Überkopf-Gepäckfach (1) nach einem der Ansprüche 1 bis 12, **dadurch gekennzeichnet, dass** an den Rahmenteilen (9) Einrichtungen (23) zur Befestigung von Deckenpaneelen (24) integriert sind.

14. Überkopf-Gepäckfach (1) nach einem der Ansprüche 7 bis 13, **dadurch gekennzeichnet, dass** in der Mulde (3) eine Lichtschranke (26) oder dgl. zur Vermeidung der Bewegung in die geschlossene Position im Falle von herausragenden Teilen angeordnet ist.

15. Überkopf-Gepäckfach (1) nach einem der Ansprüche 7 bis 14, **dadurch gekennzeichnet, dass** an der Mulde (3) ein Endschalter (27) angeordnet ist, der mit der Elektromotor-Getriebeeinheit (2) verbunden ist.

## Claims

1. An overhead luggage compartment (1) for aircraft (F), comprising a tray (3) for accommodating pieces of luggage (L), which tray (3) can be pivoted about an axis of rotation (A) between a closed position and an open position, and comprising a housing (4), which encloses the tray (3) in the closed position and has devices (5) arranged thereon for fastening to a supporting structure (S) of the aircraft (F), and a suspension device (6) for a passenger service unit (7), and comprising a closure element (8) for holding the tray (3) in the closed position, wherein the housing (4) is formed by two frame parts (9) arranged laterally to the tray (3), which frame parts (9) are connected to each other by means of cross-braces (10),
**characterized in that**
the fastening devices (5) and the suspension device (6) for the passenger service unit (7) as well as at least one stop element (25) for limiting the open position of the tray (3) are arranged on the frame parts (9).

2. The overhead luggage compartment (1) according to claim 1, **characterized in that** the axis of rotation (A) is arranged outside the tray (3).

3. The overhead luggage compartment (1) according to claim 1 or 2, **characterized in that** at least one cross-brace (11) is arranged above the tray (3) and at least one cross-brace (10) is arranged behind the tray (3).

4. The overhead luggage compartment (1) according to any of claims 1 to 3, **characterized in that** the frame parts (9) and the cross-braces (10) are made of metal or a fibre-reinforced plastic composite material.

5. The overhead luggage compartment (1) according to any of claims 1 to 4, **characterized in that** damping elements (12) are arranged between the tray (3) and at least one frame part (9).

6. The overhead luggage compartment (1) according to any of claims 1 to 5, **characterized in that** the passenger service unit (7) is adapted to be arranged between the suspension device (6) and a mounting rail (13) fastened to the supporting structure (S) of the aircraft (F).

7. The overhead luggage compartment (1) according to any of claims 1 to 6, **characterized in that** an electric motor transmission unit (2) is provided for moving the tray (3) about the axis of rotation (A) between the closed and the open positions.

8. The overhead luggage compartment (1) according to claim 7, **characterized in that** the electric motor transmission unit (2) is arranged on a frame part (9) and is connected to a hollow shaft (14) extending along the tray (3), which hollow shaft (14) is connected to the tray (3) via a transmission (15).

9. The overhead luggage compartment (1) according to any of claims 1 to 8, **characterized in that** the tray (3) is formed of two sidewalls (16), a bottom (17), a rear wall (22) and a cover wall (18), and that the bottom (17) of the tray (3) is preferably designed in double.

10. The overhead luggage compartment (1) according to claim 9, **characterized in that** the tray (3) is between 1.5 and 2.5 m long.

11. The overhead luggage compartment (1) according to any of claims 1 to 10, **characterized in that** a seat row lettering (19) is arranged on the outside of a cover plate (11) arranged between the frame parts (9) and/or on the tray (3) a handrail (20) is arranged.

12. The overhead luggage compartment (1) according to any of claims 9 to 11, **characterized in that** sealing elements (21) are arranged on the sidewall (16) of the tray (3) which are intended for sealing the gap between the frame part (9) and the sidewall (16) of the tray (3) in the open position and the closed position of the tray (3).

13. The overhead luggage compartment (1) according to any of claims 1 to 12, **characterized in that** devices (23) for mounting ceiling panels (24) are integrated in the frame parts (9).

14. The overhead luggage compartment (1) according to any of claims 7 to 13, **characterized in that** in the tray (3) a light barrier (26) or the like is arranged for avoiding movement into the closed position in the case of any projecting parts.

15. The overhead luggage compartment (1) according to any of claims 7 to 14, **characterized in that** a limit switch (27) is arranged on the tray (3), which is connected to the electric motor transmission unit (2).

## Revendications

1. Compartiment à bagages de plafond (1) pour avions (F), avec un bac (3) pouvant pivoter autour d'un axe de rotation (A) entre une position ouverte et une position fermée et destiné à recevoir des bagages (L), et avec une enceinte (4) entourant le bac (3) dans la position fermée et portant des dispositifs (5) destinés à la fixation sur une structure (S) porteuse de l'avion (F) et avec un dispositif de suspension (6) pour une unité de service pour passagers (7), et avec un élément de fermeture (8) destiné à maintenir le bac (3) dans la position fermée,
l'enceinte (4) étant formée par deux parties de cadre (9) disposées sur le côté du bac (3), lesquelles parties de cadre (9) sont raccordées l'une à l'autre par le biais de traverses (10),
**caractérisé en ce que**
les dispositifs de fixation (5) et le dispositif de suspension (6) pour l'unité de service pour passagers (7) ainsi qu'au moins un élément de butée (25) destiné à limiter la position ouverte du bac (3) sont disposés sur les parties de cadre (9).

2. Compartiment à bagages de plafond (1) selon la revendication 1, **caractérisé en ce que** l'axe de rotation (A) est disposé à l'extérieur du bac (3).

3. Compartiment à bagages de plafond (1) selon la revendication 1 ou 2, **caractérisé en ce qu'**au moins une traverse (11) est disposée au-dessus du bac (3), et au moins une traverse (10) est disposée derrière le bac (3).

4. Compartiment à bagages de plafond (1) selon l'une des revendications 1 à 3, **caractérisé en ce que** les parties de cadre (9) et les traverses (10) sont formées en métal ou en matériau composite synthétique renforcé de fibre.

5. Compartiment à bagages de plafond (1) selon l'une des revendications 1 à 4, **caractérisé en ce que** des éléments d'amortissement (12) sont disposés entre le bac (3) et au moins une partie de cadre (9).

6. Compartiment à bagages de plafond (1) selon l'une des revendications 1 à 5, **caractérisé en ce que** l'unité de service pour passagers (7) peut être disposée entre le dispositif de suspension (6) et un rail de montage (13) fixé sur la structure (S) porteuse de l'avion (F).

7. Compartiment à bagages de plafond (1) selon l'une des revendications 1 à 6, **caractérisé en ce qu'**une unité de transmission à moteur électrique (2) est prévue pour le déplacement du bac (2) autour de l'axe de l'axe de rotation (A) entre la position fermée et la position ouverte.

8. Compartiment à bagages de plafond (1) selon la revendication 7, **caractérisé en ce que** l'unité de transmission à moteur électrique (2) est disposée sur une partie de cadre (9) et est raccordée à un arbre creux (14) s'étendant le long du bac (3), lequel arbre creux (14) est raccordé au bac (3) par le biais de transmissions (15).

9. Compartiment à bagages de plafond (1) selon l'une des revendications 1 à 8, **caractérisé en ce que** le bac (3) est formé de deux parois latérales (16), d'un fond (17), d'une paroi arrière (22) et d'une paroi supérieure (18), et **en ce que** le fond (17) du bac (3) est de préférence constitué de façon double.

10. Compartiment à bagages de plafond (1) selon la revendication 9, **caractérisé en ce que** la longueur du bac (3) est comprise entre 1,5 et 2,5 m.

11. Compartiment à bagages de plafond (1) selon l'une des revendications 1 à 10, **caractérisé en ce qu'**une inscription de rangées de sièges (19) est disposée sur le côté extérieur d'une plaque de recouvrement (11) disposée entre les parties de cadre (9), et ou respectivement ou **en ce qu'**une main courante (20) est disposée sur le bac (3).

12. Compartiment à bagages de plafond (1) selon l'une des revendications 9 à 11, **caractérisé en ce que** des éléments d'étanchéité (21) destinés à assurer l'étanchéité de l'interstice entre la partie de cadre (9) et la paroi latérale (16) du bac (3) en position ouverte et fermée du bac (3) sont disposés sur la paroi latérale (16) du bac (3).

13. Compartiment à bagages de plafond (1) selon l'une des revendications 1 à 12, **caractérisé en ce que** des systèmes (23) destinés à la fixation de panneaux de plafond (24) sont intégrés sur les parties de cadre (9).

14. Compartiment à bagages de plafond (1) selon l'une des revendications 7 à 13, **caractérisé en ce que**, dans le bac (3), il est disposé une barrière photoélectrique (26) ou similaire destinée à éviter le mouvement vers la position fermée au cas où des parties dépassent vers l'extérieur.

15. Compartiment à bagages de plafond (1) selon l'une des revendications 7 à 14, **caractérisé en ce que**, sur le bac (3), il est disposé un interrupteur de fin de course (27) qui est raccordé à l'unité de transmission à moteur électrique (2).
